(19) **Europäisches Patentamt / European Patent Office / Office européen des brevets**

(11) **EP 1 481 509 B1**

(12) **EUROPÄISCHE PATENTSCHRIFT**

(45) Veröffentlichungstag und Bekanntmachung des Hinweises auf die Patenterteilung:
**20.04.2011   Patentblatt 2011/16**

(51) Int Cl.:
**H04L 9/26** *(2006.01)*

(21) Anmeldenummer: 03707883.9

(22) Anmeldetag: **05.03.2003**

(86) Internationale Anmeldenummer:
**PCT/AT2003/000063**

(87) Internationale Veröffentlichungsnummer:
**WO 2003/075507 (12.09.2003 Gazette 2003/37)**

(54) **KODEGENERATOR UND VORRICHTUNG ZUR SYNCHRONEN ODER ASYNCHRONEN SOWIE PERMANENTEN IDENTIFIKATION ODER VER- UND ENTSCHLÜSSELUNG VON DATEN BELIEBIGER LÄNGE**

CODE GENERATOR AND DEVICE FOR SYNCHRONOUS OR ASYNCHRONOUS AND PERMANENT IDENTIFICATION OR ENCODING AND DECODING OF DATA OF ANY PARTICULAR LENGTH

GENERATEUR DE CODE ET DISPOSITIF POUR L'IDENTIFICATION OU LE CODAGE ET DECODAGE SYNCHRONES OU ASYNCHRONES ET PERMANENTS DE DONNEES D'UNE LONGUEUR QUELCONQUE

(84) Benannte Vertragsstaaten:
**AT BE BG CH CY CZ DE DK EE ES FI FR GB GR HU IE IT LI LU MC NL PT RO SE SI SK TR**

(30) Priorität: **05.03.2002   AT 3382002**

(43) Veröffentlichungstag der Anmeldung:
**01.12.2004   Patentblatt 2004/49**

(73) Patentinhaber:
- **Cordes, René**
  **2323 Mannswörth (AT)**
- **Schobesberger, Ernst**
  **1040 Wien (AT)**
- **M&C Consult Invest & Trade GmbH**
  **1040 Wien (AT)**

(72) Erfinder:
- **Cordes, René**
  **2323 Mannswörth (AT)**

- **Schobesberger, Ernst**
  **1040 Wien (AT)**
- **M&C Consult Invest & Trade GmbH**
  **1040 Wien (AT)**

(74) Vertreter: **Haffner, Thomas M. et al**
**Haffner und Keschmann**
**Patentanwälte OG**
**Schottengasse 3a**
**1014 Wien (AT)**

(56) Entgegenhaltungen:
- **KENCHENG ZENG: "PSEUDORANDOM BIT GENERATORS IN STREAM-CIPHER CRYPTOGRAPHY" COMPUTER, IEEE COMPUTER SOCIETY, LONG BEACH., CA, US, US, Bd. 24, Nr. 2, 1. Februar 1991 (1991-02-01), Seiten 8-17, XP000219462 ISSN: 0018-9162**

EP 1 481 509 B1

**Beschreibung**

Die Erfindung betrifft einen Codegenerator mit einer Mehrzahl von zu einer codeproduzierenden Reihe geschalteten Speicherelementen, wie z.B. Flip-Flops, wobei der Ausgang des in der Reihe letzten Speicherelements mit dem Eingang des in der Reihe ersten Speicherelements zu einem Kreis zusammengeschlossen ist, wobei wenigstens ein EXOR-Gatter vorgesehen ist, dessen erster Eingang mit dem Ausgang eines in der codeproduzierenden Reihe befindlichen Speicherelements, dessen zweiter Eingang mit dem Ausgang eines weiteren in der codeproduzierenden Reihe befindlichen Speicherelemente und dessen Ausgang mit dem Eingang des in der codeproduzierenden Reihe dem mit dem ersten Eingang des EXOR-Gatters verbundenen Speicherelement nachfolgenden Speicherelements verbunden ist. Ein derartiger Codegenerator ist in dem Artikel "PSEUDORANDOM BIT GENERATORS IN STREAM-CIPHER CRYPTOGRAPHY" von Kencheng Zeng, veröffentlicht in COMPUTER, IEEE COMPUTER SOCIETY, LONG BEACH., CA, US, US, Bd. 24, Nr. 2,1-Februar 1991 (1991-02-01), Seiten 8-17, XP000219462 ISSN: 0018-9162 beschrieben. Codegeneratoren werden zur Verschlüsselung und Übertragung von Informationen über Kommunikationsnetzwerke eingesetzt. Prinzipiell benützen alle verschlüsselungsmethoden einen Code, auch wenn die zu verschlüsselnde Information selbst als Code Verwendung findet. Je besser der für die Verschlüsselung verwendete Code versteckt ist, desto effektiver ist die Verschlüsselung. Je länger der Code ist, desto schwerer ist er zu entschlüsseln. Beispielsweise bräuchte ein unendlicher Code gar nicht versteckt zu werden, da er ja nie ganz bekannt ist. Funktionell ist jeder Code als unendlich anzusehen, der sich nicht vor dem Ende der zu verschlüsselnden Information wiederholt. Ein funktionell unendlicher Code hat den Vorteil, dass der Ver- und Entschlüsselungsvorgang selbst denkbar einfach durch eine einzige EXOR oder EXNOR - Verknüpfung realisiert werden kann. Ein funktionell unendlicher Code hat den Nachteil, dass er nicht übertragen werden kann; er muss generiert werden.

Es gibt eine einfache Möglichkeit einen funktionell unendlichen Code zu generieren, indem man die beiden Eingänge eines EXOR-Gatters mit zwei Ausgängen von zu einer Reihe zusammengeschalteten Speicherelementen, also beispielsweise eines schieberegisters, verbindet und den Ausgang des EXOR-Gatters mit dem Eingang des Schieberegisters rekursiv verschaltet.

Das Ergebnis ist eine Codesequenz, deren maximale Länge

$$L_c = 2^n - 1$$

($L_c$ = Länge der Codesequenz; n = Anzahl der codegenerierenden in Reihe geschalteten Speicherelemente)

Bit beträgt.

Nachteilig bei diesem Codegenerator ist die Tatsache, dass von der Codesequenz leicht auf die Struktur des Generators geschlossen werden kann, so dass sie mit einem gleichgebauten Generator nachgeneriert werden kann. Nachstehende Patente stellen Versuche dar, diese Codesequenzen mit weiteren Prozessen weiter zu verschlüsseln, so dass sie nicht mehr rekonstruierbar sind: US 2001033663, WO 01/05090, Wo 99/22484, WO 99/16208, JP10320181, WO 98/02990 und EP 0782069. Den aus diesen Veröffentlichungen bekanntgewordenen Codegeneratoren ist gemein, dass die Länge der produzierten Codes durch Resonanzeffekte verkürzt wird. Weiters existiert eine Anzahl von Pseudozufallsgeneratoren, wie sie beispielsweise in der JP 2000-101567, JP 2001-016197, EP 0913964 oder EP 0782069 beschrieben sind. Diese codegeneratoren arbeiten mit Variablen, wobei mit Hilfe eines mathematischen nichtlinearen Umrechnungsalgorithmus aus diesen Variablen eine Codesequenz errechnet wird. Dies geschieht zur Herabsetzung der Rückrechenbarkeit mit Hilfe von hohen und höchsten mathematischen Funktionen. Diesen Systemen ist gemein, dass sie sich einer mathematischen Funktionseinheit bedienen, welche einen multi-Bit-Eingang, an dem die in einem Codespeicher befindliche Ausgangsvariable anliegt, sowie einen ein-Bit-Ausgang haben, aus dem die serielle Codesequenz ausgelesen wird, was sich nachteilig auf die maximal erreichbare Codegenerierungsgeschwindigkeit auswirkt. Ebenso ist es Gegenstand der hohen und höchsten Mathematik, für komplexe Formeln einfache Lösungen zu finden, weshalb das Risiko der Entdeckung einer einfachen Lösung für eine auch noch so komplexe mathematische Funktion nie ganz auszuschließen und naturgemäß nicht abwägbar ist.

Die vorliegende Erfindung zielt darauf ab, eine Vorrichtung zur Generierung von möglichst vielen unterschiedlichen, möglichst langen Codesequenzen zu schaffen, wobei mit niedrigstem Aufwand an Schaltungselementen das Auslangen gefunden werden soll. Der Codegenerator soll unter Verwendung von Bitoperationen zur simultanen Verschlüsselung von binären Datenströmen hoher Frequenz über lange Zeiträume geeignet sein, wobei sogar der Ausgangscode geheim bleiben soll.

Zur Lösung dieser Aufgabe sieht die Erfindung einen Codegenerator nach Anspruch 1 vor. Dabei ist sowohl die Struktur des Codegenerators als auch der in ihm ablaufende Algorithmus bekannt. Die Struktur ist allerdings so geartet, dass sie eine derartig hohe Anzahl an unterschiedlichen Codes in einer derartig großen Länge zu generieren im Stande ist, dass die Entdeckung des gerade verwendeten Codes so wie die aktuell produzierte Stelle in der Codesequenz nur mit einer extrem geringen Wahrscheinlichkeit möglich ist. Der Code kann dann nicht nachgeneriert werden, wenn der Generator so viele verschiedene Codes erstellen kann, dass von einem Abschnitt des einzelnen Codes nicht auf dessen Fortsetzung geschlossen werden kann. Der Generator generiert die Codesequenz auf der niedrigsten möglichen Ebene von Bit - Operationen. Es werden nicht Variablenwerte als Grundlage für die Berechnung der Codesequenzen benutzt sondern lediglich Zustände einzelner Speicherelemente, wie zum Beispiel zu einer Reihe zusammengeschaltete Flip-Flops bzw. Schieberegister. Daraus ergibt sich die höchstmögliche Effizienz im Verhältnis zur Anzahl der eingesetzten Schaltelemente einerseits und zur Gesamtlänge der generierbaren Codesequenzen sowie zur Anzahl der generierbaren verschiedenen Codes andererseits. Außerdem ist damit sichergestellt, dass der Codegenerator die höchstmögliche Produktionageschwindigkeit leisten kann.

Erfindungsgemäß wird die von dem Codegenerator erzeugte Codesequenz dadurch verändert, dass man zwischen zwei in der codeproduzierenden Reihe befindliche Speicherelemente ein weiteres EXOR-Gatter einsetzt, an dessen einen Eingang man den Ausgang eines ersten speicherelements anschließt und den zweiten Eingang vom Ausgang irgendeines weiteren in der Reihe befindlichen Speicherelements speisen lässt und schließlich mit dem Ausgang des EXOR-Gatters den Eingang des in Flussrichtung der Reihe an das erste Speicherelement anschließenden Speicherelementes speist.

Damit ausgehend von einer leeren Speicherelementen-Reihe ein Code generiert wird, der eine maximale Länge im Verhältnis zur Anzahl der verwendeten Speicherelemente aufweist, muss in der gesamten geschlossenen Reihe von Speicherelementen ein einzelner Inverter vorhanden sein. Naturgemäß kann die Funktion des Inverters mit der Funktion des EXOR-Gatters in einem Schaltelement zusammengefasst sein, beispielsweise mit Hilfe eines EXNOR-Gatters.

Um nun unterschiedliche Codes zu programmieren, wird bevorzugt das bzw. die EXOR-Gatter in ihrer rekursiven Funktion in Abhängigkeit von einem internen codespeicherinhalt an- und abschaltbar gemacht. Zu diesem Zweck ist die Erfindung derart weitergebildet, dass in die den zweiten Eingang des wenigstens einen EXOR-Gatters und den Ausgang des weiteren in der codeproduzierenden Reihe befindlichen Speicherelements verbindende Leitung ein UND-Gatter derart geschaltet ist, dass der Ausgang des UND-Gatters mit dem zweiten Eingang des EXOR-Gatters, der erste Eingang des UND-Gatters mit dem Ausgang des weiteren in der codeproduzierenden Reihe befindlichen Speicherelements und der zweite Eingang des UND-Gatters mit dem Ausgang eines der Programmierung dienenden Speicherelements verbunden ist. Der Zustand des jeweiligen der Programmierung dienenden Speicherelements bestimmt somit, ob das jeweilige EXOR-Gatter an- oder abgeschaltet ist. In der Folge wird ein derartiges Speicherelement als codeprogrammierendes Speicherelement bezeichnet.

Um den Code variantenreicher zu gestalten ist bevorzugt eine Mehrzahl von EXOR-Gattern vorgesehen, deren erster Eingang jeweils von einem Ausgang eines in der codeproduzierenden Reihe befindlichen Speicherelements gespeist wird und deren zweiter Eingang jeweils vom Ausgang eines weiteren in der codeproduzierenden Reihe befindlichen Speicherelements gespeist wird, welches eine Anzahl von Speicherelementen in Flussrichtung der Reihe von dem jeweils mit dem ersten Eingang verbundenen Speicherelement entfernt ist, welche jeweils einer unterschiedlichen Primzahl entspricht, die größer als 1 und kein Teilbetrag der Gesamtzahl der in Reihe geschalteten Speicherelemente ist. Dadurch wird die Länge der produzierten Codes nicht durch Resonanzeffekte verkürzt. Dabei wird durch eine entsprechende Struktur der Eingliederung der verschiedenen codeverändernden EXOR-Gatter sichergestellt, dass zwischen den beiden Speicherelementen, welche sich in der zu einem Kreis geschlossenen codeproduzierenden Reihe und an denen sich die beiden Eingänge der EXOR-Gatter befinden, jeweils keine solchen Teilstrecken der Speicherelementen-Reihe existieren, die ein Teil oder ein Vielfaches einer anderen Teilstrecke oder der Gesamtstrecke des Kreises sind. Dies kann am effektivsten dadurch realisiert werden, dass die Anzahl der in diesen Teilstrecken befindlichen Speicherelemente sowie deren Gesamtzahl Primzahlen entsprechen.

Bei einer bevorzugten Weiterbildung der Erfindung soll der interne Codespeicherinhalt derart generiert werden, dass nicht einmal der Anwender den Inhalt des internen Code speichers kennt. Dadurch wird die Entschlüsselung des Codes weiter erschwert. Zu diesem Zweck ist die Ausbildung bevorzugt derart getroffen, dass eine Mehrzahl von codeprogrammierenden, jeweils einem UND-Gatter und einem EXOR-Gatter zugeordneten Speicherelementen vorgesehen und in einer zu einem Kreis geschlossenen, codeprogrammierenden Reihe geschalten ist und wenigstens ein EXOR-Gatter angeordnet ist, dessen erster Eingang mit dem Ausgang eines in der codeprogrammierenden Reihe befindlichen Speicherelements, dessen zweiter Eingang mit dem Ausgang eines weiteren in der codeprogrammierenden Reihe befindlichen Speicherelements und dessen Ausgang mit dem Eingang des in der codeprogrammierenden Reihe dem mit dem ersten Eingang des EXOR-Gatters verbundenen Speicherelement nachfolgenden Speicherelements verbunden ist. Die Programmierung der Zustände der codeverändernden EXOR-Gatter mit Hilfe der UND-Gatter wird somit von einer gesonderten Speicherelementen-Reihe vorgenommen, welche in der selben Weise, wie dies bei der codeproduzierenden Speicherelementen-Reihe der Fall ist, unter Verwendung von wenigstens einem

EXOR-Gatter rekursiv verschaltet ist. Die Programmierung erfolgt dabei dadurch, dass die codeprogrammierende Speicherelementen-Reihe mit einem Programmtakt versorgt wird, wobei in einfacher Art und Weise eine Mehrzahl von Codegeneratoren auf einen identischen Code programmiert werden können, wenn, wie es einer bevorzugten Ausbildung entspricht, der Codegenerator wenigstens einen Anschluss für wenigstens einen zweiten, identisch aufgebauten Codegenerator aufweist, sodass beide Codegeneratoren zur gleichen Zeit mit dem selben Programmtakt versorgt werden können.

Die Erfindung betrifft weiters eine Einrichtung zum Senden und Empfangen von verschlüsselten Informationen mit wenigstens zwei Codegeneratoren, wobei die Codegeneratoren jeweils einen Anschluss für die gleichzeitige Versorgung der codeprogrammierenden Speicherelemente aller zusammengeschlossenen Codegeneratoren mit demselben Programmtakt aufweisen, sodass die codeprogrammierenden Speicherelemente aller zusammengeschlossenen Codegeneratoren gleichzeitig sämtliche mögliche Zustandskombinationen durchlaufen und bei gleichzeitigem Trennen der Codegeneratoren von dem Programmtakt mit derselben Programmierung versehen sind.

Bei einer bevorzugten Weiterentwicklung gemäß den Unteransprüchen 4, 5 und 8 werden auch die verschiedenen codeprogrammierenden EXOR-Gatter wiederum von einer programmierenden Speicherelementen-Reihe bestehend aus weiteren Speicherelementen in ihrer programmbeeinflussenden Wirkung ein- und ausgeschaltet, so dass bei der Programmierung nicht sämtliche möglichen Programmierungszustände linear durchlaufen werden müssen und daher auch aus der Dauer der Programmierzeit nicht einmal annähernd auf den Zustand der Schlüssel nach deren Programmierung geschlossen werden kann.

Die Erfindung wird nachfolgend anhand von in der Zeichnung dargestellten Ausführungsbeispielen näher erläutert. In dieser zeigt Fig. 1 eine Prinzipschaltung für eine programmierbare rekursive Codegeneration, Fig. 2 ein Gesamtschaltungsbeispiel für eine aus einem Codegenerator aufgebaute Funktionseinheit, mit deren zwei man eine verschlüsselte Verbindung zwischen zwei Computern aufbauen kann, und Fig. 3 ein Gesamtschaltungsbeispiel eines abgewandelten Codegenerators.

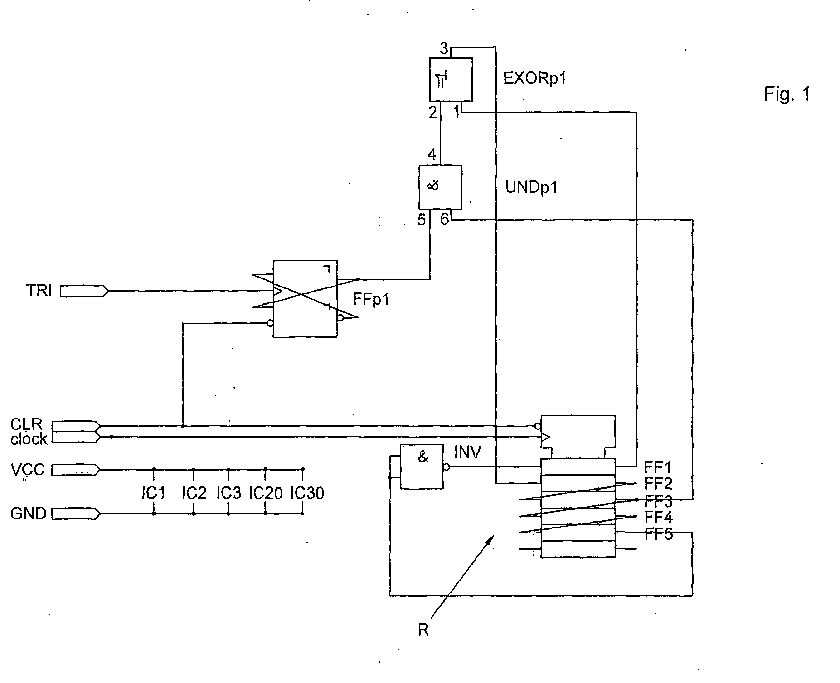

Fig. 1 zeigt eine Prinzipschaltung, bei der fünf Speicherelemente, nämlich die zu einer codeproduzierenden Reihe R zusammengeschalteten Flip-Flops $FF_{1,2,3,4,5}$, und ein EXOR-Gatter $EXOR_{p1}$ und ein UND-Gatter $UND_{p1}$ und einen Inverter INV verschaltet sind, und zwar in der Weise, dass der Eingang 2 des EXOR-Gatters $EXOR_{p1}$ mit dem Ausgang 4 des UND-Gatters $UND_{p1}$, dessen einer Eingang 5 mit einem Ausgang eines der Programmierung dienenden Speicherelements $FF_{p1}$ und dessen anderer Eingang 6 mit dem Ausgang des in der codeproduzierenden Reihe befindlichen Speicherelements $FF_3$, und der andere Eingang 1 des EXOR-Gatters $EXOR_{p1}$ mit dem Ausgang des in der codeproduzierenden Reihe R befindlichen Speicherelements $FF_1$ und der Ausgang 3 der EXOR-Gatters $EXOR_{p1}$ mit dem Eingang des Speicherelements $FF_2$ und der Ausgang des Speicherelements $FF_5$ mit den Eingängen des Inverters INV und der Ausgang des Inverters INV wiederum mit dem Eingang des in Flussrichtung nächsten Speicherelements $FF_1$ in der Reihe - sohin rekursiv - verbunden ist. Man erhält mit dieser Schaltung ausgehend von einer Reihe R völlig leerer Speicherelemente $FF_{1,2,3,4,5}$ eine Codesequenz generiert. Es vergehen mindestens 3 Takte ehe sich der Code wiederholt. Die einzelnen Schaltelemente können mit handelsüblichen Bausteinen verwirklicht werden: Beispielswiese kann ein IC der Type 74HC174 für die aneinandergereihten Speicherelemente $FF_{1,2,3,4,5}$ verwendet werden, ebenso ein IC 74HC08 für das UND-Gatter $UND_{p1}$, ein IC 74HC386 für das EXOR-Gatter $EXOR_{p1}$, ein IC 74HC00 für den Inverter INV und in IC 74HC107 für den Speicherbaustein $FF_{p1}$.

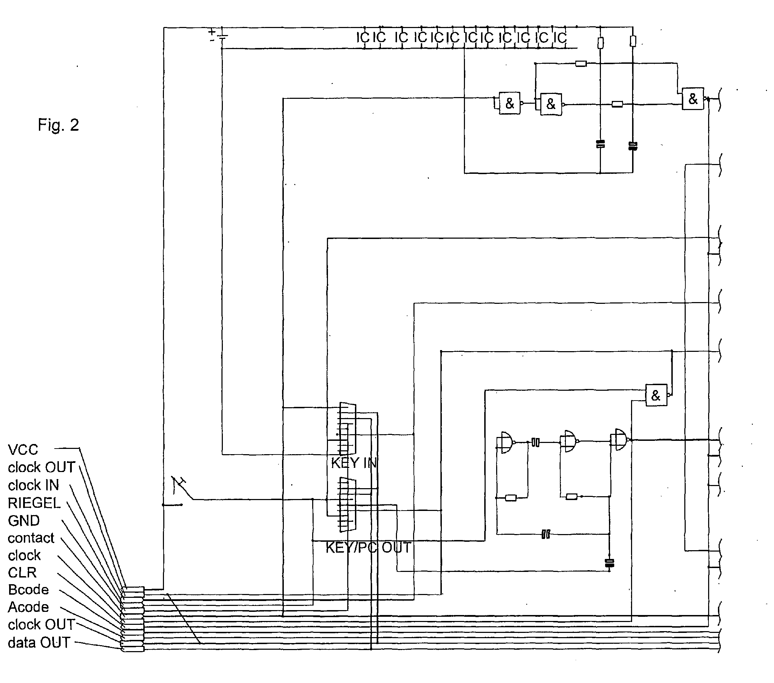

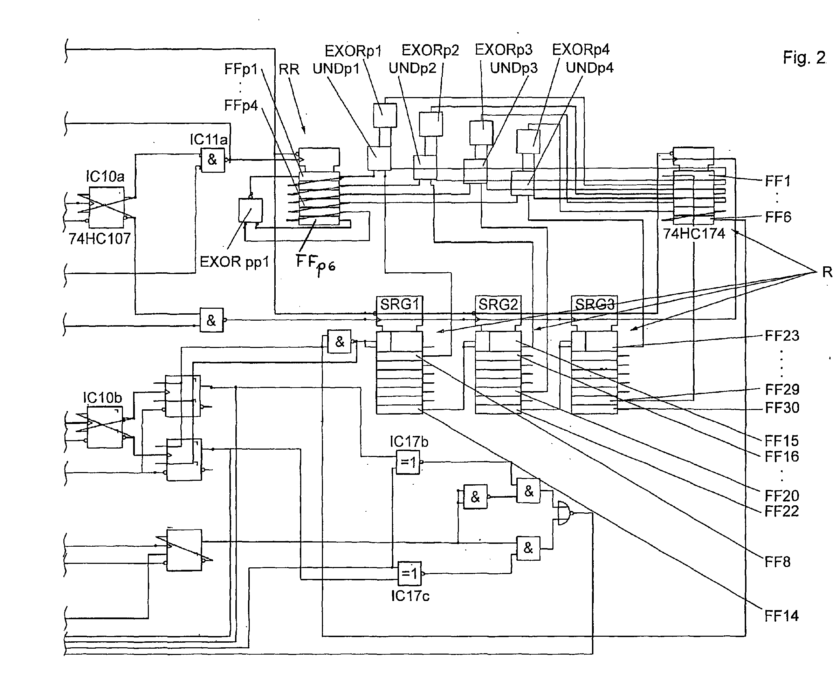

Die in Fig. 1 gezeigte Reihe kann naturgemäß verlängert werden und es kann sich beispielsweise eine verlängerte Reihe R ergeben, wie sie in Fig. 2 dargestellt ist. Dabei kann eine Anzahl ununterbrochen in Reihe geschalteter Speicherelemente auch in Form von Schieberegister $SRG_1$, $SRG_2$, ... verwirklicht werden. Es verdoppelt sich die Länge des Codes pro hinzugefügtem Speicherelement, so dass sich die Länge des Codes wie folgt berechnet

$$L_c = 2^n - 1$$

($L_c$ = Länge der Codesequenz; n = Anzahl der codegenerierenden in Reihe geschalteten Speicherelemente)

Wenn diese Einheit mit einem bestimmten Takt betriebe wird gilt für die Dauer des Codes:

$$T_c = \frac{2^n - 1}{f_c}$$

($T_c$ = Dauer bis sich der Code wiederholt; $f_c$ = Codegenerierungstaktfrequenz)

Mit weniger als 50 Speicherelementen bei einer Codegenerierungstaktfrequenz von 384.000 Bit/s läuft der Code länger als ein Jahr ohne dass sich die Sequenz wiederholt, so dass ein zu verschlüsselndes Signal simultan über einen ebenso langen Zeitraum verschlüsselt über eine Standleitung übersendet und entschlüsselt werden kann, so dass Übertragungen live über einen ebenso langen Zeitraum möglich sind.

Wenn man nun bei entsprechender Länge der Speicherelementen-Reihe R an mehren Stellen dieser Speicherelementen-Reihe R zwischen einem Speicherelement $FF_{1,2,3,4}$ und dem nächsten in der Reihe R befindlichen Speicherelement $FF_{2,3,4,5}$ ein EXOR-Gatter $EXOR_{p1,p2,p3,p4}$ einfügt und dieses dann mit dem Signal von einem dritten Speicherelement $FF_{8,15,20,23}$ speist, so verändert man jeweils den dadurch erzeugten Code (Fig. 2).

Bei einer Mehrzahl von codeverändernden EXOR-Gattern $EXOR_{p1,p2,p3,P4}$. siehe Fig. 2, soll sichergestellt sein, dass die verschiedenen codeverändernden EXOR-Gatter $EXOR_{p1,p2,p3,p4}$, deren erster Eingang von einem Ausgang eines Speicherelements $FF_{1,2,3,4}$ gespeist wird, ihren zweiten Eingang jeweils vom Ausgang eines Speicherelements $FF_{8, 15, 20, 23}$ gespeist erhalten, welches eine Anzahl von Speicherelementen in Flussrichtung vom erstgenannten Speicherelement $FF_{1, 2, 3, 4}$ entfernt ist, welche jeweils einer unterschiedlichen Primzahl entspricht, die größer als 1 aber kein Teilbetrag der Gesamtzahl der in Reihe R geschalteten Speicherelemente ist, sodass es bei der Beeinflussung der Codesequenz zu keinen codesequenzverkürzenden Resonanzeffekten kommt. Zwischen den entsprechenden Speicherelementpaaren $FF_{1,8}$; $FF_{2,15}$; $FF_{3,20}$; $FF_{4,23}$ liegt also jeweils eine Anzahl von 7, 13, 17 und 19 (Primzahlen) Speicherelementen.

Wenn man an einen der beiden Eingänge 2 des jeweiligen EXOR-Gatters $EXOR_{p1}$ bzw. $EXOR_{p1, p2, p3, p4}$ den Ausgang 4 eines UND-Gatters $UND_{p1}$ bzw. $UND_{p1, p2, p3, p4}$ dessen einer Eingang 6 am Ausgang des Speicherelements $FF_3$ bzw. $FF_{8, 15, 20, 23}$ hängt, anschließt, dann kann man dieses EXOR-Gatter $EXOR_{p1}$ bzw. $EXOR_{p1, p2, p3, p4}$ in seiner codeverändernden Wirkung über den zweiten Eingang 5 des UND-Gatters $UND_{p1}$ bzw. $UND_{p1, p2, p3, p4}$ an- und abschalten und wenn man daran jeweils ein weiteres Speicherelement $FF_{p1}$ bzw. $FF_{p1, p2, p3, p4}$ anschließt, das An- und Abschalten der codebeeinflussenden Wirkung des EXOR-Gatters $EXOR_{p1}$ bzw. $EXOR_{p1, p2, p3, p4}$ programmierbar machen (Fig. 1 bzw. Fig. 2). Die codeprogrammeirenden Speicherelemente $FF_{p1, p2, p3, p4}$ können dabei zu einer Reihe RR zusammengeschaltet sein. In weiterer Folge können die codeprogrammierenden Speicherelemente $FF_{p1, p2, p3, p4}$ selbst wiederum mit Hilfe eines EXOR-Gatters $EXOR_{pp1}$ rekursiv verschaltet werden.

Die Anzahl der programmierbaren unterschiedlichen Codes berechnet sich wie folgt:

$$N_c = 2^{pn} - 1$$

($N_c$ = Anzahl der möglichen unterschiedlichen Code; pn = Anzahl der programmierbaren EXOR - Gatter $EXOR_{p1, p2, ...pn}$)

Wenn man nun im Besitz eines identen Codegenerators ist, und an Hand einer bestimmten Anzahl von Bit den weiteren Verlauf der Codesequenz erschließen möchte so hängt die Wahrscheinlichkeit, mit der man die richtige Fortsetzung der Codesequenz erkennt, sowohl von der Anzahl der in der Codegenerierung verwendeten Speicherelemente $FF_{1, 2, ...n}$ als auch jener der programmierbaren, codeverändernden EXOR-Gatter $EXOR_{p1, p2, ...pn}$ ab. Daraus ergibt sich eine Wahrscheinlichkeit, die dem Code zugrunde liegende Programmierung zu entdecken und sohin den weiteren Verlauf des Codes vorauszusagen von:

$$W = \frac{N_b}{(2^n - 1) * (2^{pn} - 1)}$$

($N_b$ = Anzahl der beobachteten Bit der Codesequenz; n = Anzahl der codegenerierenden in Reihe geschalteten Speicherelemente $FF_{1, 2, ...n}$; pn = Anzahl der programmierbar den Code verändernden EXOR-Gatter $EXOR_{p1, p2, ....pn}$)

Beispiel:

233 ist die 52. Primzahl. Wenn man die 1 nicht nützt und die 233 die Gesamtzahl der in Reihe geschalteten Speicherelemente ausdrückt, so befinden sich auf dieser Strecke 50 unterschiedliche Speicherelemente, welche sich, jeweils in Entfernung von einem Ausgangs-Speicherelement befinden, die einer Primzahl entspricht (np = 50). Da jedes rekursive $EXOR\text{-}Gatter_{1-50}$, jeweils zwischen einem nächsten $Speicherelement_{1-50}$ beginnend vom ersten in Reihe eingeschaltet ist, verlängert sich die Gesamtlänge der Speicherelemente auf (n = 233 + 50 = 283).

Daraus folgt:

$$W = \frac{N_b}{(2^n - 1) * (2^{pn} - 1)} = \frac{N_b}{(2^{283} - 1) * (2^{50} - 1)}$$

$$W = \frac{N_b}{(1{,}5541351138 * 10^{85} - 1) * (1{,}1258999068 * 10^{15} - 1)}$$

$$W \sim \frac{N_b}{1{,}7498005798 * 10^{100}}$$

Mit anderen Worten man muss die Codesequenz $1{,}7498005798 * 10^{100}$ Taktschritte lang beobachten, damit man mit der Wahrscheinlichkeit 1 eine bestimmte Sequenz entdeckt. Wenn die Taktfrequenz 384000 Hz beträgt ergibt dies eine notwendige Beobachtungszeit von $1{,}4449430312*10^{87}$ Jahren.

Indem man die codeprogrammierenden Speicherelemente ($FF_{p1, p2, p3, p4, p5, p6}$) rekursiv miteinander verschaltet, so dass sie innerhalb des Zeitintervalls

$$T_{pn} = \frac{2^{pn} - 1}{f_p}$$

($T_{pn}$ = Durchlaufzeit aller möglichen Programmierzustände; pn = Anzahl der Programm-Speicherelemente; $f_p$ = Programmiertaktfrequenz)

sämtliche mögliche Zustandskombinationen durchlaufen, ergibt sich die Programmierung aus einer bestimmte Zeitspanne, in der die codeprogrammierenden Speicherelemente mit einem Programmtakt versorgt werden, so dass durch gleichzeitiges Ein- und Ausschalten des Programmtaktes an zwei identen Codegeneratoren (Einschaltimpuls und Ausschaltimpuls an Pin 12 von IC 10a in Schaltung Fig. 2) diese so durchgeführt werden kann, dass mehrere Codegeneratoren idente Codesequenzen generieren, der Inhalt der Programmierung aber nicht einmal den Programmierern bekannt ist.

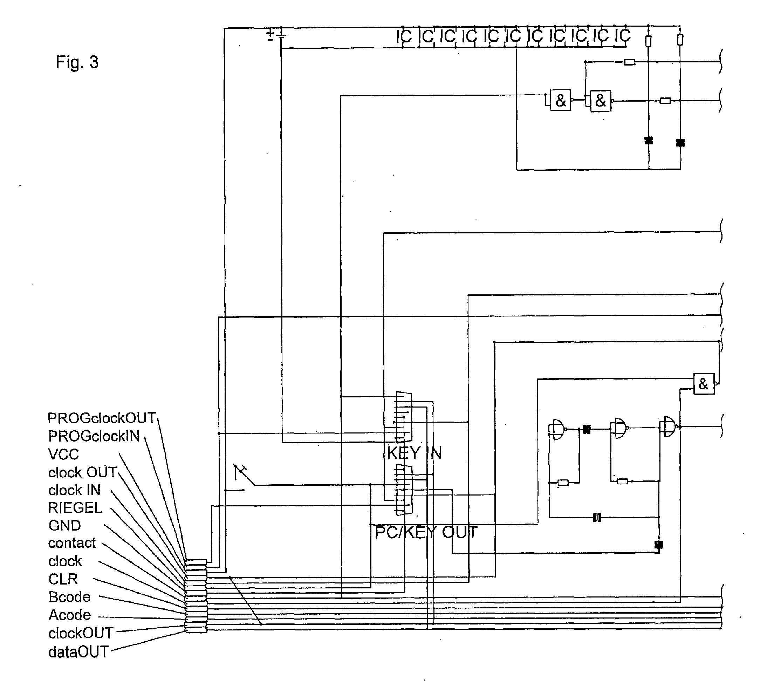

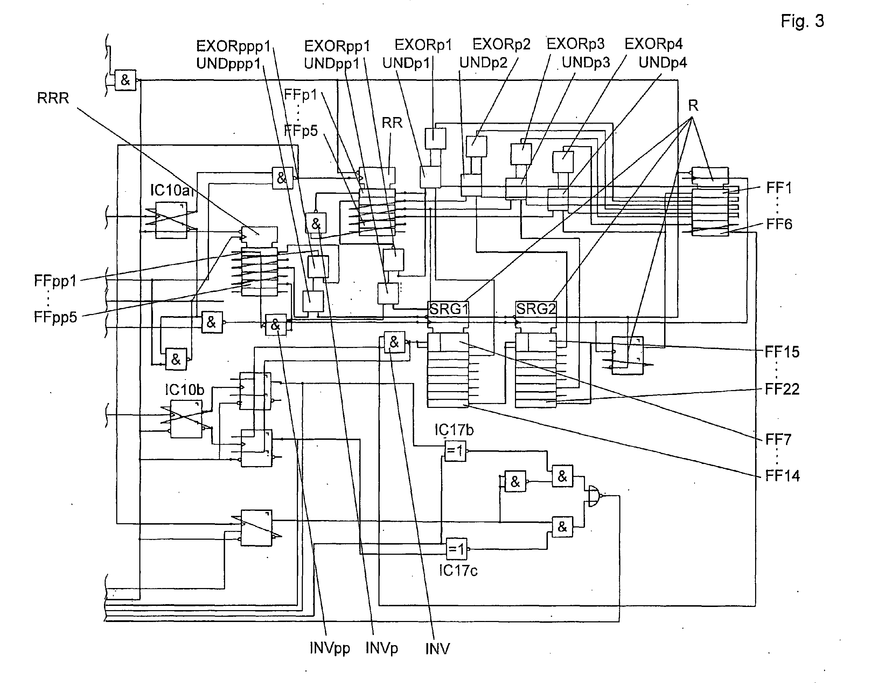

Damit aus der Programmierdauer auch nicht annähernd die Programmierung erschließbar ist kann die Programmierung zweistufig erfolgen. Hierzu kann eine weitere Programmierungs-Ebene hinzugefügt werden, indem das codeprogammierende EXOR-Gatter $EXOR_{pp1}$, selbst wiederum unter Zwischenschaltung eines UND-Gatters $UND_{pp1}$ mit einer Speicherelementen-Reihe RRR verbunden und somit programmierbar gemacht wird, wobei wiederum ein EXOR-Gatter $EXOR_{ppp1}$ zur rekursiven Verschaltung der Reihe RRR verwendet wird (Fig. 3).

In der ersten Stufe der Programmierung wird der Programmierer programmiert, so dass er einen Abschnitt der möglichen Programmierzustände aufsucht, welcher dann der Ausgangspunkt für die darauffolgende Programmierung darstellt, bei welcher sämtliche Punkte eines solchen Abschnittes aufgesucht werden können.

Ausgehend von obigen Rechenbeispiel wird dadurch gewährleistet, dass die $(2^{283}-1)*(2^{50}-1)$ verschiedenen Zustände in $2^{50}-1$ verschiedene Abschnitte zergliedert werden, von welchen einer in der ersten Programmierphase ausgewählt wird. Dieser Auswahlvorgang erfolgt in maximal $2^{ppn}-1$ Schritten (ppn = Anzahl der Primzahlen, die in der Anzahl der bei der Programmierung verwendeten Primzahlen (50) enthalten sind, also 16) Dies bedeutet, dass maximal $2^{16}$ Schritte erfolgen müssen, ehe sämtliche Abschnitte aufgesucht sind. Bei einer Programmiertaktfrequenz von 1 MHz ist dieser Vorgang in 0,065 Sekunden abgeschlossen. Ein Zeitraum, der wohl bei jeder Programmierung durchmessen wird, da er unter der Reaktionszeit des Menschen liegt, weshalb gewährleistet ist, dass aus der tatsächlich verstrichenen Programmierzeit keine Rückschlüsse auf die Programmierung der Schlüssel gezogen werden können.

Indem man nur jeden 2. Zustand eines Muttercodes einen von zwei Tochtercodes zuweist kann man aus einem zwei Codes schaffen, welche zwar verwandt aber nicht ähnlich sind.

Die Codierung des Ausgangssignals erfolgt durch ein EXNOR-Gatter (IC 17b, c, Fig. 2) in dessen einen Eingang das zu verschlüsselnde Signal und in dessen zweiten Eingang der Code eingebracht wird, so dass an dessen Ausgang das mit dem Code verschlüsselte Ausgangssignal erscheint.

Die Decodierung des Eingangssignals erfolgt durch ein EXNOR-Gatter, in dessen einen Eingang das zu entschlüsselnde Signal und in dessen zweiten Eingang der Code eingebracht wird, so dass an dessen Ausgang das mit dem Code entschlüsselte Ausgangssignal erscheint.

Durch Einsatz von wenigstens zwei solcher ident programmierter Codegeneratoren kann ein zweiter Inhaber desselben Codegenerators identifiziert werden und in weiterer Folge durch Synchronisation der Codegenerationen mit diesem eine ständige, verschlüsselte Datenverbindung aufgebaut werden, über die permanent und live Daten ausgetauscht werden können.

Da die Schaltung bei der Codegenerierung selbst keine CPU-Zeit in Anspruch nimmt, ist sie unabhängig von jedweder Hand-Shake Zeit und daher einzig und allein durch die spezifischen Schaltzeiten, der elektronischen Bauelemente, aus denen sie aufgebaut ist, in ihrer Codeproduktionsgeschwindigkeit begrenzt. Mit handelsüblichen TTL Bauelementen sind so ohne weiteres Codeproduktionsgeschwindigkeiten im Megaherzbereich realisierbar.

Im nun folgenden Abschnitt wird der innere Ablauf der Schaltung nach Fig. 2 schrittweise dargestellt, wobei für die Funktionseinheit nach Schaltung Fig. 2 die Bezeichnung "Schlüssel" verwendet wird:

| Innerer Ablauf der Schaltung | | |
|---|---|---|
| AKTION | REAKTION | FUNKTION |
| 1.) Der Schlüssel A wird mit seinem Ausgang für Computer und Schlüssel mit dem Eingang für Schlüssel des Schlüssels B verbunden | Sowohl in Schlüssel A als auch in Schlüssel B werden die jeweiligen Kontakteingänge auf LOW gesetzt | Die Produktion von Code wird in Schlüssel A und B eingestellt Schlüssel A wird von seinem eigenen Takt betrieben Der Takt wird von Schlüssel A auf Schlüssel B übertragen |
| 2.) Die Riegeltaste (Riegel AUF/ Riegel ZU) des Schlüssel B wird erstmals betätigt | Das Riegel AUF - Signal wird von Schlüssel A nach Schlüssel B wietergeleitet In beiden Schlüsseln wird ein CLR - Signal abgeleitet | Sämtliche Schieberegister in den beiden Schlüsseln werden gelöscht |
| 3.) | Der Takt wird in den Programmierteil sowohl von Schlüssel A als auch von Schlüssel B eingespeist | Die Programmierung läuft verzahnt synchron in beiden Schlüsseln, jedoch ohne direkte Übertragung des Programminhaltes von Schlüssel A nach Schlüssel B, ab. |
| 4.) Die Riegeltaste des Schlüssel A wird abermals betätigt | Der Takt wird in den Programmierteil sowohl von Schlüssel A als auch von Schlüssel B nicht mehr eingespeist | Synchrones Stopp der Programmierung |
| 5.) Die beiden. Schlüssel werden getrennt | Sowohl in Schlüssel A als auch in Schlüssel B werden die jeweiligen Kontakteingänge auf HIGH gesetzt | Die Produktion von Code kann nun sowohl in Schlüssel A und B synchron gestartet werden. |

Im nun folgenden Abschnitt wird der schrittweise Ablauf des Aufbaues einer verschlüsselten Verbindung zwischen zwei Computern mit zwei Funktionseinheiten nach Schaltung Fig. 2 dargestellt:

| Übersicht der möglichen Abläufe | | | |
|---|---|---|---|
| MODUS | Identifikationsmodus | Synchronisationsmodus | Synchronmodus |
| CODE | X | X | X |
| ADRESSE | | X | X |
| ZEIT | | | X |
| Identifizieren | X | | |
| Synchronisieren | X | X | |
| Decodieren | X | X | X |

| Identifikationsmodus | | | | | |
|---|---|---|---|---|---|
| (A) | (B) | PHASE | HANDLUNGEN | SCHLÜSSEL (A) | SCHLÜSSEL (B) |
| -x | -x | Programmierung | Schlüssel (A) wird mit seinem Computer/ Schlüssel Ausgang mit dem Schlüsseleingang von Schlüssel (B) verbunden | Schlüssel (A) wird programmiert und wird ihm der Code C1 als Sendecode und der Code C2 als Empfangscode zugewiesen | Schlüssel (B) wird programmiert und wird ihm der Code C2 als Sendecode und der Code C1 als Empfangscode zugewiesen |
| 0 | 0 | Trennung | Schlüssel (A) wird aus Schlüssel (B) herausgezogen | Schlüssel (A) schweigt | Schlüssel (B) schweigt |
| 0 | 0 | Schlüsselaktivierung (A) | | Schlüssel (A) wird mit einem Computer verbunden | |
| 0 | 0 | | | Eine E-Mail wird auf dem Computer von Schlüssel (A) geschrieben | |
| 0 + 1000 + E-Mail | 0 | Codepaketabruf (A, 1000 + E-Mail) | | Die E-Mail wird (live) mit Hilfe von C1 codiert, wobei eine Sequenz von 1000 Bit leeren Codes samt der Codeentstehungsze it uncodiert dem E-Mail vorangestellt wird | |
| 0 + 1000 + E-Mail | 0 | Datenübertragung | | Die E-Mail wird an die Homepage des Computers von Schlüssel (A) gesandt und dort ausgestellt | |
| 0 + 1000 + E-Mail | 0 | Schlüsselaktivierung (B) | | | Schlüssel (B) wird mit einem Computer verbunden |
| 0 + 1000 + E-Mail | 0 + 1000 | Codepaketabruf (B, 1000) | | | Eine Sequenz von 1000 Bit des Code C1 wird aus Schlüssel (B) ausgelesen und an eine Suchmaschine transferiert |

(fortgesetzt)

| Identifikationsmodus | | | | | |
|---|---|---|---|---|---|
| (A) | (B) | PHASE | HANDLUNGEN | SCHLÜSSEL (A) | SCHLÜSSEL (B) |
| 0 + 1000 + E-Mail | 0 + 1000 | | | | Wenn die Homepage von Schlüssel (A) entdeckt ist wird die E-Mail abgerufen |
| 0 + 1000 + E-Mail | 0 + 1000 + E -Mail | Codepaketabruf (B, E-Mail) | | | Schlüssel (B) decodiert (asynchron) mit Hilfe von C1 das Signal von Schlüssel (A) |
| 0 + 1000 + E-Mail | A | Codefreifluss (B) | | | Schlüssel (B) generiert nunmehr laufend Code |
| 0 + 1000 + E-Mail | A | | | | Schlüssel (B) weiß jetzt wo Schlüssel (A) zu finden ist und kann mit ihm Verbindung aufnehmen um sich mit ihm zu synchronisieren. |
| Synchronisationsmodus | | | | | |
| B | 0 | | | | Die E-Mail wird vom Server des Schlüssel (B) abgerufen |
| C | 0 + 1000 | Codepaketabruf (B, 1000 ) | | | Schlüssel (B) vergleicht die 1000 Bit Sequenz von Schlüssel (A) mit seinem C1 und verschiebt diese so lange bis Synchronität besteht (erkennbar an den leeren 1000 Bit) decodiert (synchron) mit Hilfe von C1 das Signal von Schlüssel (A) Ergebnis: leer |
| D | 0 + 1000 + E-Mail | Codepaketabruf (B, E- Mail) | | | Schlüssel (B) decodiert (synchronisiert) mit Hilfe von C1 den Inhalt der Botschaft von (A) |

(fortgesetzt)

| Identifikationsmodus | | | | | |
|---|---|---|---|---|---|
| (A) | (B) | PHASE | HANDLUNGEN | SCHLÜSSEL (A) | SCHLÜSSEL (B) |
| E | E | Codefreifluss (A, B) | | | Schlüssel (B) weiß jetzt wo sich Schlüssel (A) auf der Zeitachse befindet, so dass er nunmehr synchron mit ihm Code aussenden kann und solcherart in den Synchronmodus wechseln kann. |
| Synchronmodus | | | | | |
| E + 1000 | E + 1000 | | | Schlüssel (A) decodiert (live) mit Hilfe von C2 das Signal von Schlüssel (B) Ergebnis: leer | Schlüssel (B) decodiert (live) mit Hilfe von C1 das Signal von Schlüssel (A) Ergebnis: leer |
| F + Bot schaftsdauer | F + Botsch aftsdauer | Datenübertragung | Ein Inhalt wird in Schlüssel (A) eingespeist | Schlüssel (A) codiert (live) mit Hilfe von C1 den Inhalt der Botschaft | Schlüssel (B) decodiert (live) mit Hilfe von C1 den Inhalt der Botschaft von (A) |
| G + Botscshaftsdauer | G + Botschaftsdauer | | Ein Inhalt wird in Schlüssel (B) eingespeist | Schlüssel (A) decodiert (live) mit Hilfe von C2 den Inhalt der Botschaft von Schlüssel (B) | Schlüssel (B) codiert (live) mit Hilfe von C2 den Inhalt der Botschaft |

**Patentansprüche**

1. Codegenerator mit einer Mehrzahl von zu einer codeproduzierenden Reihe (R) geschalteten Speicherelementen $(FF_{1, 2, ...n})$, wie z.B. Flip-Flops, wobei der Ausgang des in der Reihe (R) letzten Speicherelements $(FF_5)$ mit dem Eingang des in der Reihe (R) ersten Speicherelements $(FF_1)$ zu einem Kreis zusammengeschlossen ist, wobei wenigstens ein EXOR-Gatter $(EXOR_{p1})$ vorgesehen ist, dessen erster Eingang (1) mit dem Ausgang eines in der codeproduzierenden Reihe (R) befindlichen Speicherelements $(FF_1)$, dessen zweiter Eingang (2) mit dem Ausgang eines weiteren in der codeproduzierenden Reihe (R) befindlichen Speicherelements $(FF_3)$ und dessen Ausgang (3) mit dem Eingang des in der codeproduzierenden Reihe (R) dem mit dem ersten Eingang (1) des EXOR-Gatters $(EXOR_{p1})$ verbundenen Speicherelement $(FF_1)$ nachfolgenden Speicherelements $(FF_2)$ verbunden ist, **dadurch gekennzeichnet, dass** die Ausgänge und mindestens ein Eingang der Speicherelemente unter Zwischenschaltung des wenigstens einen EXOR-Gatters $(EXOR_{p1})$ rekursiv verschaltet sind, dass in die den zweiten Eingang (2) des wenigstens einen EXOR-Gatters $(EXOR_{p1})$ und den Ausgang des weiteren in der codeproduzierenden Reihe (R) befindlichen Speicherelements $(FF_3)$ verbindende Leitung ein UND-Gatter $(UND_{p1})$ derart geschalten ist, dass der Ausgang (4) des UND-Gatters $(UND_{p1})$ mit dem zweiten Eingang (2) des EXOR-Gatters $(EXOR_{p1})$, der erste Eingang (6) des UND-Gatters $(UND_{p1})$ mit dem Ausgang des weiteren in der codeproduzierenden Reihe (R) befindlichen Speicherelements $(FF_3)$ und der zweite Eingang (5) des UND-Gatters $(UND_{p1})$ mit dem Ausgang eines codeprogrammierenden Speicherelements $(FF_{p1})$ verbunden ist und dass der Ausgang eines in der codeproduzierenden Reihe (R) befindlichen Speicherelements $(FF_5)$ mit dem Eingang eines Inverters (INV) und der Ausgang des Inverters (INV) mit dem Eingang eines anderen in der codeproduzierenden Reihe (R) angeordneten Speicherelements $(FF_1)$ verbunden ist

2. Codegenerator nach Anspruch 1, **dadurch gekennzeichnet, dass** eine Mehrzahl von EXOR-Gattern $(EXOR_{p1, p2, p3, p4})$ vorgesehen ist, deren erster Eingang jeweils von einem Ausgang eines in der codeproduzierenden Reihe (R) befindlichen Speicherelements $(FF_{1, 2, 3, 4})$ gespeist wird und deren zweiter Eingang jeweils vom Ausgang eines weiteren in der codeproduzierenden Reihe (R) befindlichen Speicherelemente $(FF_{8, 15, 20, 23})$ gespeist wird, welches eine Anzahl von Speicherelementen in Flussrichtung der Reihe (R) von dem jeweils mit dem ersten Eingang verbundenen Speicherelement $(FF_{1, 2, 3, 4})$ entfernt ist, welche jeweils einer unterschiedlichen Primzahl entspricht, die größer als 1 und kein Teilbetrag der Gesamtzahl der in Reihe (R) geschalteten Speicherelemente $(FF_{1, 2, ...n})$ ist.

3. Codegenerator nach Anspruch 1 oder 2, **dadurch gekennzeichnet, dass** eine Mehrzahl von codeprogrammierenden, jeweils einem UND-Gatter $(UND_{p1, p2, p3, p4})$ und einem EXOR-Gatter $(EXOR_{p1, p2, p3, p4})$ zugeordneten Speicherelementen $(FF_{p1, p2, p3, p4, ...pn})$ vorgesehen und in einer zu einem Kreis geschlossenen Reihe (RR) geschalten ist und wenigstens ein EXOR-Gatter $(EXOR_{pp1})$ angeordnet ist, dessen erster Eingang mit dem Ausgang eines in der codeprogrammierenden Reihe (RR) befindlichen Speicherelements $(FF_{p6})$, dessen zweiter Eingang mit dem Ausgang eines weiteren in der codeprogrammierenden Reihe (RR) befindlichen Speicherelements $(FF_{p5})$ und dessen Ausgang mit dem Eingang des in der codeprogrammierenden Reihe (RR) dem mit dem ersten Eingang des EXOR-Gatters $(EXOR_{pp1})$ verbundenen Speicherelement $(FF_{p6})$ nachfolgenden Speicherelements $(FF_{p1})$ verbunden ist.

4. Codegenerator nach Anspruch 3, **dadurch gekennzeichnet, dass** in die den zweiten Eingang des wenigstens einen EXOR-Gatters $(EXOR_{pp1})$ und den Ausgang des weiteren in der codeprogrammierenden Reihe (RR) befindlichen Speicherelements $(FF_{p3})$ verbindende Leitung ein UND-Gatter $(UND_{pp1})$ derart geschalten ist, dass der Ausgang des UND-Gatters $(UND_{pp1}$ mit dem zweiten Eingang des EXOR-Gatters $(EXOR_{pp1})$, der erste Eingang des UND-Gatters $(UND_{pp1})$ mit dem Ausgang des weiteren in der codeprogrammierenden Reihe (RR) befindlichen Speicherelements $(FF_{p3})$ und der zweite Eingang des UND-Gatters $(UND_{pp1})$ mit dem Ausgang eines der Programmierung der codeprogrammierenden Reihe (RR) dienenden Speicherelements $(FF_{pp5})$ verbunden ist.

5. Codegenerator nach Anspruch 4, **dadurch gekennzeichnet, dass** eine Mehrzahl von der Programmierung der codeprogrammierenden Reihe (RR) dienenden, jeweils einem UND-Gatter $(UND_{pp1})$ und einem EXOR-Gatter $(EXOR_{pp1})$ zugeordneten Speicherelementen $(FF_{pp1, pp2, pp3, pp4, ...ppn})$ vorgesehen und in einer zu einem Kreis geschlossenen Reihe (RRR) geschalten ist und wenigstens ein EXOR-Gatter $(EXOR_{ppp1})$ angeordnet ist, dessen erster Eingang mit dem Ausgang eines in der Reihe (RRR) befindlichen Speicherelements $(FF_{pp1})$, dessen zweiter Eingang mit dem Ausgang eines weiteren in der Reihe (RRR) befindlichen Speicherelements $(FF_{pp3})$ und dessen Ausgang mit dem Eingang des in der Reihe (RRR) dem mit dem ersten Eingang des EXOR-Gatters $(ExOR_{ppp1})$ verbundenen Speicherelement $(FF_{pp1})$ nachfolgenden Speicherelements $(FF_{pp2})$ verbunden ist.

6. Codegenerator nach einem der Ansprüche 1 bis 5, **dadurch gekennzeichnet, dass** er wenigstens einen Anschluss für wenigstens einen zweiten, identisch aufgebauten Codegenerator aufweist, sodass beide Codegeneratoren zur gleichen Zeit mit dem selben Programmtakt versorgt werden können.

7. Einrichtung zum Senden und Empfangen von verschlüsselten Informationen mit wenigstens zwei Codegeneratoren nach einem der Ansprüche 1 bis 6, **dadurch gekennzeichnet, dass** die Codegeneratoren jeweils wenigstens einen Anschluss für die gleichzeitige Versorgung der codeprogrammierenden Speicherelemente ($FF_{p1, p2, p3, p4}$) aller zusammengeschlossenen , Codegeneratoren mit demselben Programmtakt aufweisen, sodass die codeprogrammierenden Speicherelemente ($FF_{p1, p2, p3, ...pn}$) aller zusammengeschlossenen Codegeneratoren gleichzeitig sämtliche mögliche zustandskombinationen durchlaufen und bei gleichzeitigem Trennen der Codegeneratoren von dem Programmtakt mit derselben Programmierung versehen sind.

8. Einrichtung nach Anspruch 7, **dadurch gekennzeichnet, dass** die Codegeneratoren jeweils zwei Anschlüsse für die gleichzeitige Versorgung der codeprogrammierenden Speicherelemente ($FF_{p1, p2, p3,...pn}$) und der der Programmierung der codeprogrammierenden Speicherelemente ($FF_{p1, p2, p3,...pn}$) dienenden Speicherelemente ($FF_{pp1, pp2, pp3,...ppn}$) aller zusammengeschlossenen Codegeneratoren mit zwei unabhängig laufenden Programmtakten aufweisen, wobei die der Programmierung der codeprogrammierenden Speicherelemente ($FF_{p1, p2, p3,...pn}$) dienenden Speicherelemente ($FF_{pp1, pp2, pp3,...ppn}$) sämtliche mögliche Zustandskombinationen mindestens einmal und die codeprogrammierenden Speicherelemente ($FF_{p1, p2, p3,...pn}$) aller zusammengeschlossenen Codegeneratoren gleichzeitig eine bestimmte Anzahl sämtlicher möglicher Zustandskombinationen durchlaufen und nach gleichzeitigem Trennen der Codegeneratoren von den Programmtakten alle zusammengeschlossenen Codegeneratoren mit derselben Programmierung versehen sind.

**Claims**

1. Code generator with a plurality of storage elements (FF1, 2, ...n) connected in a code-producing series (R), e.g., flip-flops, wherein the output of the last storage element (FF5) in the series (R) is linked with the input of the first storage element (FF1) in the series (R) to form a circuit, whereby at least one EXOR gate (EXORp1) is provided, whose first input (1) is connected with the output of a storage element (FF1) located in the code-producing series (R), whose second input (2) is connected with the output of another storage element (FF3) located in the code-producing series(R), and whose output (3) is connected with the input of the storage element (FF2) following the storage element (FF1) connected with the first input (1) of the EXOR gate (EXORp1) in the code-producing series (R), **characterized in that** the outputs and at least one input of the storage elements are recursively interconnected with at least one EXOR gate (EXORp1) inserted, that an AND gate (ANDp1) is connected in the line connecting the second input (2) of the at least one EXOR gate (EXORp1) and the output of the other storage element (FF3) located in the code-reproducing series (R), so that the output (4) of the AND gate (ANDp1) is connected with the second input (2) of the EXOR gate (EXORp1), the first input (6) of the AND gate (ANDp1) is connected with the output of the other storage element (FF3) located in the code-producing series (R), and the second input (5) of the AND gate (ANDp1) is connected with the output of a code-programming storage element (FFp1) and that the output of a storage element (FF5) located in the code-producing series (R) is connected with the input of an inverter (INV), and the output of the inverter (INV) is connected with the input of another storage element (FF1) arranged in the code-producing series (R).

2. Code generator according to claim 1, **characterized in that** a plurality of EXOR gates (EXORp1, p2, p3, p4) is provided, whose first input is supplied by a respective output of one of the storage elements (FF1, 2, 3, 4) located in the code-producing series (R), and whose second input is supplied by the respective output of another storage element (FF8, 15, 20, 23) located in the code-producing series (R), which is spaced a number of storage elements in the conducting direction of the series (R) away from the storage element (FF1, 2, 3, 4) respectively connected with the first input, which respectively corresponds to a different prime number that is greater than 1 and does not constitute a partial amount of the overall number of storage elements (FF1, 2, ...n) connected in series (R).

3. Code generator according to claim 1 or 2, **characterized in that** a plurality of code-programming storage elements (FFp1, p2, p3, p4, ...pn) that are respectively assigned to an AND gate (ANDpl,p2,p3,p4) and an EXOR gate (EXORpl, p2,p3,p4) is provided and connected in a series (RR) comprising a closed circuit, and at least one EXOR gate (EXORpp1) is provided whose first input is connected with the output of a storage element (FFp6) located in the code-programming series (RR), whose second input is connected with the output of another storage element (FFp5) located in the code-programming series (RR), and whose output is connected with the input of the storage element (FFp1) following the storage element (FFp5) connected with the first input of the EXOR gate (EXORpp1) in the code-programming series (RR).

4. Code generator according to claim 3, **characterized in that** an AND gate (ANDpp1) is connected in the line connecting the second input of the at least one EXOR gate (EXORpp1) and the output of the other storage element (FFp3) located in the code-reproducing series (RR), so that the output of the AND gate (ANDpp1) is connected with the second input of the EXOR gate (EXORpp1), the first input of the AND gate (ANDpp1) is connected with the output of the other storage element (FFp3) located in the code-producing series (RR), and the second input of the AND gate (ANDpp1) is connected with the output of a storage element (FFpp5) used for programming the code-programming series (RR).

5. Code generator according to claim 4, **characterized in that** a plurality of storage elements (FFpp1, pp2, pp3, pp4, ...ppn) used to program the code-programming series (RR) that are respectively assigned to an AND gate (ANDpp1) and an EXOR gate (EXORpp1) is provided and connected in a series (RRR) comprising a closed circuit, and at least one EXOR gate (EXORppp1) is provided whose first input is connected with the output of a storage element (FFpp1) located in the series (RRR), whose second input is connected with the output of another storage element (FFpp3) located in the series (RRR), and whose output is connected with the input of the storage element (FFpp2) following the storage element (FFpp1) connected with the first input of the EXOR gate (EXORppp1) in the series (RRR).

6. Code generator according to one of claims 1 to 5, **characterized in that** it has at least one connection for at least a second, identically structured code generator, so that both code generators can be supplied with the same program clock at the same time.

7. Device for sending and receiving encrypted information with at least two code generators according to one of claims 1 to 6, **characterized in that** the code generators each have at least one connection for simultaneously supplying the code-programming storage elements (FFp1, p2, p3, p4) of all interconnected code generators with the same program clock, so that the code-programming storage elements (FFp1, p2, p3, ...pn) of all interconnected code generators simultaneously run through all possible state combinations, and are provided with the same programming when the code generators are simultaneously separated from the program clock.

8. Device according to claim 7, **characterized in that** the code generators each have two connections for simultaneously supplying the code-programming storage elements (FFp1, p2, p3, ... pn) and the storage elements (FFpp1, pp2, pp3, ...ppn) used to program the code-programming storage elements (FFp1, p2, p3, ...pn) of all interconnected code generators have two independently running program clocks, wherein the storage elements (FFpp1, pp2, pp3, ...ppn) used to program the code-programming storage elements (FFp1, p2, p3, ...pn) run through all possible state combinations at least once, and the code-programming storage elements (FFp1, p2, p3, ...pn) of all interconnected code generators simultaneously run through a specific number of all possible state combinations, and that all interconnected code generators are provided with the same programming after the simultaneous separation of code generators from the program clocks.

## Revendications

1. Générateur de code comprenant une pluralité d'éléments de mémoire ($FF_{1, 2, ...,n}$) montés en série productrice de code (R), par exemple des circuits bistables, dans lequel la sortie du dernier élément de mémoire ($FF_5$) de la série (R) est associée à l'entrée du premier élément de mémoire ($FF_1$) dans la série (R) pour former un circuit, dans lequel il est prévu au moins une porte OU exclusif ($EXOR_{p1}$), dont la première entrée (1) est connectée à la sortie d'un élément de mémoire ($FF_1$) se trouvant dans la série (R) productrice de code, dont la seconde entrée (2) est connectée à la sortie d'un autre élément de mémoire ($FF_3$) se trouvant dans la série (R) productrice de code et dont la sortie (3) est connectée à l'entrée de l'élément de mémoire ($FF_2$) succédant dans la série (R) productrice de code à l'élément de mémoire ($FF_1$) connecté à la première entrée de la porte OU exclusif ($EXOR_{p1}$), **caractérisé en ce que** les sorties et au moins une entrée des éléments de mémoire sont connectées de manière récursive en intercalant la au moins une porte OU exclusif ($EXOR_{p1}$), **en ce que** dans la ligne connectant la seconde entrée (2) de la au moins une porte OU exclusif ($EXOR_{p1}$) et la sortie de l'autre élément de mémoire ($FF_3$) se trouvant dans la série (R) productrice de code, une porte ET ($ET_{p1}$) est montée de sorte que la sortie (4) de la porte ET ($ET_{p1}$) soit connectée à la seconde entrée (2) de la porte OU exclusif ($EXOR_{p1}$), que la première entrée (6) de la porte ET ($ET_{p1}$) soit connectée à la sortie de l'autre élément de mémoire ($FF_3$) se trouvant dans la série (R) productrice de code et que la seconde entrée (5) de la porte ET ($ET_{p1}$) soit connectée à la sortie d'un élément de mémoire ($FF_{p1}$) programmateur de code et **en ce que** la sortie d'un élément de mémoire ($FF_5$) se trouvant dans la série (R) productrice de code est connectée à l'entrée d'un inverseur (INV) et la sortie de l'inverseur (INV) est connectée à l'entrée d'un autre élément de mémoire ($FF_1$) agencé dans la série (R) productrice de code.

**2.** Générateur de code selon la revendication 1, **caractérisé en ce qu'**il est prévu une pluralité de portes OU exclusif ($EXOR_{p1, p2, p3, p4}$), dont la première entrée est alimentée respectivement par une sortie d'un élément de mémoire ($FF_{1, 2, 3, 4}$) se trouvant dans la série (R) productrice de code et dont la seconde entrée est alimentée respectivement par la sortie d'un autre élément de mémoire ($FF_{8, 15, 20, 23}$) se trouvant dans la série (R) productrice de code, qui est éloigné de l'élément de mémoire ($FF_{1, 2, 3, 4}$) connecté respectivement à la première entrée d'un certain nombre d'éléments de mémoire dans le sens d'écoulement de la série (R), qui correspond respectivement à un nombre premier différent, qui est supérieur à 1 et qui n'est pas une somme partielle du nombre total des éléments de mémoire ($FF_{1, 2, ..., n}$) montés en série (R).

**3.** Générateur de code selon la revendication 1 ou 2, **caractérisé en ce qu'**une pluralité d'éléments de mémoire ($FF_{p1, p2, p3, p4, ..., pn}$) programmateurs de code, affectés respectivement à une porte ET ($ET_{p1, p2, p3, p4}$) et à une porte OU exclusif ($EXOR_{p1, p2, p3, p4}$) est prévue et montée en série (RR) fermée en circuit et il est agencé au moins une porte OU exclusif ($EXOR_{pp1}$), dont la première entrée est connectée à la sortie d'un élément de mémoire ($FF_{p6}$) se trouvant dans la série (RR) programmatrice de code, dont la seconde entrée est connectée à la sortie d'un autre élément de mémoire ($FF_{p5}$) se trouvant dans la série (RR) programmatrice de code et dont la sortie est connectée à l'entrée de l'élément de mémoire ($FF_{p1}$) succédant dans la série (RR) programmatrice de code à l'élément de mémoire ($FF_{p6}$) à la première entrée de la porte OU exclusif ($EXOR_{pp1}$).

**4.** Générateur de code selon la revendication 3, **caractérisé en ce que** dans la ligne connectant la seconde entrée de la au moins une porte OU exclusif ($EXOR_{pp1}$) et la sortie de l'autre élément de mémoire ($FF_{p3}$) se trouvant dans la série (RR) programmatrice de code, une porte ET ($ET_{pp1}$) est montée de sorte que la sortie de la porte ET ($ET_{pp1}$) soit connectée à la seconde entrée de la porte OU exclusif ($EXOR_{pp1}$), que la première entrée de la porte ET ($ET_{pp1}$) soit connectée à la sortie de l'autre élément de mémoire ($FF_{p3}$) se trouvant dans la série (RR) programmatrice de code et que la seconde entrée de la porte ET ($ET_{pp1}$) soit connectée à la sortie d'un élément de mémoire ($FF_{pp5}$) servant à la programmation de la série (RR) programmatrice de code.

**5.** Générateur de code selon la revendication 4, **caractérisé en ce qu'**une pluralité d'éléments de mémoire ($FF_{pp1, pp2, pp3, pp4, ...ppn}$) servant à la programmation de la série (RR) productrice de code et affectés respectivement à une porte ET ($ET_{pp1}$) et à une porte OU exclusif ($EXOR_{pp1}$) est prévue et montée en série (RRR) fermée en circuit et **en ce qu'**il est agencé au moins une porte OU exclusif ($EXOR_{ppp1}$), dont la première entrée est connectée à la sortie d'un élément de mémoire ($FF_{pp1}$) se trouvant dans la série (RRR), dont la seconde entrée est connectée à la sortie d'un autre élément de mémoire ($FF_{PP3}$) se trouvant la série (RRR) et dont la sortie est connectée à l'entrée de l'élément de mémoire ($FF_{pp2}$) succédant dans la série (RRR) à l'élément de mémoire ($FF_{pp1}$) connecté à la première entrée de la porte OU exclusif ($EXOR_{ppp1}$).

**6.** Générateur de code selon l'une quelconque des revendications 1 à 5, **caractérisé en ce qu'**il présente au moins une connexion pour au moins un second générateur de code de structure identique de sorte que les deux générateurs de code puissent être alimentés au même moment avec le même cycle de programme .

**7.** Dispositif pour envoyer et recevoir des informations codées avec au moins deux générateurs de code selon l'une quelconque des revendications 1 à 6, **caractérisé en ce que** les générateurs de code présentent respectivement au moins une connexion pour l'alimentation simultanée des éléments de mémoire ($FF_{p1, p2, p3, p4}$) programmateurs de code de tous les générateurs de code associés avec le même cycle de programme, de sorte que les éléments de mémoire ($FF_{p1, p2, p3, ..., pn}$) programmateurs de code de tous les générateurs de code associés parcourent en même temps toutes les combinaisons d'état possibles et soient dotés de la même programmation dans le cas d'une séparation simultanée des générateurs de code du cycle de programme .

**8.** Dispositif selon la revendication 7, **caractérisé en ce que** les générateurs de code présentent respectivement deux connexions pour l'alimentation simultanée des éléments de mémoire ($FF_{p1, p2, p3, ..., pn}$) programmateurs de code et des éléments de mémoire ($FF_{pp1, pp2, pp3, ..., ppn}$) servant à la programmation des éléments de mémoire ($FF_{p1, p2, p3, ..., pn}$) programmateurs de code de tous les générateurs de code associés avec deux cycles de programme fonctionnant indépendamment, dans lequel les éléments de mémoire ($FF_{pp1, pp2, pp3, ..., ppn}$) servant à la programmation des éléments de mémoire ($FF_{p1, p2, p3, ..., pn}$) programmateurs de code parcourent toutes les combinaisons d'état possibles au moins une fois et les éléments de mémoire ($FF_{p1, p2, p3, ..., pn}$) programmateurs de code de tous les générateurs de code associés parcourent en même temps un certain nombre de toutes les combinaisons d'état possibles et, après une séparation simultanée des générateurs de code des cycles de programme, tous les générateurs de code associés sont dotés de la même programmation.

Fig. 1

EP 1 481 509 B1

Fig. 2

KEY IN

KEY/PC OUT

VCC
clock OUT
clock IN
RIEGEL
GND
contact
clock
CLR
Bcode
Acode
clock OUT
data OUT

Fig. 2

Fig. 3

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2001033663 A
- WO 0105090 A
- WO 9922484 A
- WO 9916208 A
- JP 10320181 B
- WO 9802990 A
- EP 0782069 A
- JP 2000101567 A
- JP 2001016197 A
- EP 0913964 A

### In der Beschreibung aufgeführte Nicht-Patentliteratur

- PSEUDORANDOM BIT GENERATORS IN STREAM-CIPHER CRYPTOGRAPHY. **Kencheng Zeng.** COMPUTER, IEEE COMPUTER SOCIETY, LONG BEACH. 01. Februar 1991, vol. 24, 8-17